# EUROPÄISCHE PATENTSCHRIFT

(11) **EP 3 829 844 B1**
(45) Veröffentlichungstag und Bekanntmachung des Hinweises auf die Patenterteilung: **20.11.2024**
(21) Anmeldenummer: 19752654.4
(22) Anmeldetag: 29.07.2019
(51) Int. Cl.: B29B 11/14, B29C 49/00, B65D 1/02, C08G 63/672, B29B 11/08, B29C 49/02, B29C 49/06, B29K 67/00

(54) **PREFORM AUS POLYESTER**
PREFORM MADE OF POLYESTER
PRÉFORME EN POLYESTER

(30) Priorität: 02.08.2018 CH 9472018
(43) Veröffentlichungstag der Anmeldung: 09.06.2021
(73) Patentinhaber: ALPLA Werke Alwin Lehner GmbH & Co. KG, 6971 Hard (AT)
(72) Erfinder: GOLDENSTEIN, Daniel, 6911 Lochau (AT)
(74) Vertreter: Swisspat Riederer Hasler Patentanwälte AG
(86) Internationale Anmeldenummer: PCT/EP2019/070377
(87) Internationale Veröffentlichungsnummer: WO 2020/025548

(56) Entgegenhaltungen:
- WO-A1-2016/174577
- WO-A1-2017/093685
- JP-A- 2004 035 040
- JP-A- 2016 218 393
- US-A1- 2016 167 279
- US-A1- 2017 121 453

## Beschreibung

### Gebiet der Erfindung

Die Erfindung betrifft einen Preform aus Polyester zur Herstellung eines Kunststoffbehälters in einem Blasformverfahren und ein Verfahren zur Herstellung eines Preforms.

### Stand der Technik

Im Verpackungsbereich steigen die Marktanteile von Polyestern zunehmend. Neben konventionellen Materialien wie Polyethylenterephthalat (kurz PET) und dessen Copolyestern werden sich in Zukunft auch biobasierte Polyester wie beispielsweise Polyethylenfuranoat (kurz PEF) am Markt etablieren.

Diese Polyester haben viele Vorteile gegenüber anderen Kunststoffgruppen: Sie können zum Teil oder im Falle des PEF komplett aus nachwachsenden Rohstoffen hergestellt werden, verfügen über eine sehr gute Recyclingfähigkeit (sofern keine dem Recycling schädlichen Additive/ Farbstoffe hinzugefügt werden) und schaffen mit ihrer stoffeigenen Transparenz Designvorteile, die anderen Kunststoffen verwehrt bleiben.

Zudem sind Behälter aus Polyestern nicht nur in Form von Einwegverpackungen auf dem Markt, sondern auch als Mehrwegverpackung. Hier ergeben sich im Vergleich zu Glas beispielsweise eine enorme Gewichtseinsparung und vorteilhafte mechanische Eigenschaften (z.B. kein Splitterbruch). Auch ist der Energiebedarf für die Herstellung von Behältern aus Polyestern deutlich geringer als bei der Glasherstellung.

Die Herstellung von Kunststoffbehältern geschieht häufig in 2 Stufen: Zunächst wird im Spritzgussprozess ein Vorformling (Preform) hergestellt. Dieser Vorformling wird anschließend über seinen Glasübergangspunkt hinaus erhitzt und zur Flasche aufgeblasen. Der erste Prozess der Preformherstellung stellt einen Urformprozess dar. Während diesem Prozess muss die Schmelze rapide abgekühlt werden, damit die Kristallisation gehemmt wird und das Material amorph einfriert.

Während dieser Abkühlung oder später nach dem Aufblasen des Preforms zu einer Flasche und dem Abkühlen der Flasche können sogenannte Eigenspannungen vor allem im Nahbereich des Anspritzpunktes im Material eingefroren werden, die im weiteren Verlauf häufig zu einer Spannungsrissbildung führen.

Begründet ist dies durch die Inhomogenität des Materials. Im Material liegen Bereiche niedriger Molekulardichte und Bereiche hoher Molekulardichte vor, wobei die Rissbildung vor allem im Bereich der niedrigen Molekulardichte initiiert wird. Durch den Aufblasprozess des Preforms zum fertigen Behälter werden zusätzliche Spannungen im Material erzeugt, die die Spannungsrissempfindlichkeit erhöhen. Zusätzliche Spannungen durch Innendrücke im Behälter (z.B. bei kohlensäurehaltigen Getränken, Aerosolen etc.), vor allem in Gebinden mit einem Volumen größer als 1.5 1 und äußere Einflüsse wie beispielsweise der Kontakt mit Chemikalien (insbesondere Laugen) verstärken bzw. beschleunigen die Rissbildung. Diese Rissbildung wird besonders stark von waschaktiven Substanzen, duftaktiven Substanzen wie Aldehyden, Ketonen und kurze Carbonsäuren und Lösungsmitteln wie Aceton und Ammoniak, beschleunigt. Die Abfüllung vieler Waschmittel, Kosmetikprodukte, Fensterputzmitteln, Lacke und Farben ist in Behälter aus Polyestern dadurch oftmals nicht möglich.

Der Prozess der Rissbildung wird häufig als Environmental Stress Cracking (ESC) bezeichnet, die Resistenz eines Materials gegen diesen Prozess wird folglich als Environmental Stress Cracking Resistence (ESCR) bezeichnet. Weist ein Material eine schlechte ESCR auf, so kann es zum Bruch des Behälters kommen. Je nach Innendruck kann die Ausweitung des Risses sogar zu einer Explosion führen.

Als weitere Erklärung für das oben beschriebene Verhalten kann zudem die Esterbindung ausgemacht werden: Durch Umwelteinflüsse oder Chemikalienkontakt (z.B. durch Laugen wie NaOH) ist eine Verseifung des Esters möglich, was sich in Form einer Hydrolyse bzw. einer Kettenspaltung im Material bemerkbar macht und sich in verschlechterten Materialeigenschaften widerspiegelt. Ein Versagen des Behälters wird durch die Verseifungsreaktion beschleunigt.

Während oben aufgeführte Problematik für jeden Behälter (z.B. Einwegflasche) aus Polyestern besteht, sind vor allem Mehrwegverpackungen einem zusätzlichen Risiko ausgesetzt: Mehrwegverpackungen werden nach ihrer Benutzung und vor dem erneuten Inverkehrbringen einem intensiven Waschprozess unterzogen, der bei hohen Temperaturen (teilweise bis zu 75°C) und unter Verwendung von aggressiven Chemikalien (Waschlaugen) durchgeführt wird. Oftmals äußert sich diese zunehmende Belastung durch eine Trübung der Flasche, wobei diese optische Erscheinung durch eine Vielzahl kleinster Mikrorisse hervorgerufen wird. Diese Mikrorisse lassen das Material spröde werden und führen im weiteren Verlauf zur Bildung von Makrorissen und somit zum Behälterversagen.

In der US 2017/012453 A1 ist ein Polyester beschrieben, welcher aus einer monomeren Dicarbonäure, einer veresterten monomeren Dicarbonäure oder einer Kombination der Dicarbonsäuren und einem Polyol-Monomer polymerisiert wird. Die Dicarbonsäuren inkludieren Furandicarbonsäure. Die Polyol-Monomere enthalten C2-C14 Polyole und Spirodiol. Der Polyester lässt sich gut formen. Er ist insbesondere für das Extrusionsblasformen geeignet, da er das Durchhängen bzw. das Absacken des extrudierten Schlauches verhindern oder wenigstens abschwächen kann.

Die JP 2016 218393 A offenbart eine Druckerpatrone, welche aus einem Polyester aus einer Furandicarbonsäure mit Spiroverbindungen gebildet ist. Dadurch hat der Polyester eine niedrige Temperaturfixierbarkeit und die Druckerpatrone widersteht einer erhöhten Wärmebelastung.

In der US 2016/0167279 A1 ist ein Preform beschrieben, der es ermöglicht PEF-Behälter (Flaschen) mit den erwarteten, insbesondere mechanischen Eigenschaften durch ein industrielles Spritzstreckblasverfahren zu erhalten. Der Preform besteht aus einem thermoplastischen PEF-Polymer aus einem 2,5-Furandicarboxylsäure (2,5 -DCA)-Monomer und einem Monoethylenglykol (MEG)-Monomer.

Die JP 2004 035040 A beschreibt ein Gefäss, welches aus einem Copolymer-Polyesterharz geformt ist, bestehend aus Terephthalsäure als Hauptdicarbonsäurezusammensetzung, 80-60 Mol-% Ethylenglykol und 20-40 Mol-% Spiro-Glykol-Zusammensetzung. Das Gefäss besitzt hohe Wärmebeständigkeit, Transparenz und Stoßfestigkeit, ist leicht zu formen und ist als Getränkebehälter zu verwenden, welcher für eine Hochtemperaturabfüllung geeignet ist.

Aus der WO 2016/174577 A1 ist ein Behälter mit einer äusseren Schicht, umfassend ein Bisphenol A-Polycarbonat; und einer inneren Schicht, umfassend einen Terephthalsäurecopolyester oder ein Polyethylenfuranoat oder eine Kombination daraus, bekannt. Die innere Schicht bildet eine Barriere zwischen der äusseren Schicht und dem Inneren des Behälters. Die Transparenz des Behälters nimmt um weniger als oder gleich 5 % nach Sterilisation in einem Autoklaven für 30 Minuten bei 120°C ab. Nach 50 Zyklen von Heißabfüllung mit Wasser für 30 Minuten bei 90°C nimmt die Transparenz um weniger als oder gleich 5 % ab.

Die WO 2017/093685 A1 betrifft einen thermoplastischen Polyester umfassend: Mindestens eine 1,4 : 3,6-Dianhydrohexitol-Einheit (A); mindestens eine von Cyclohexandimethanol-Einheiten verschiedene cyclische Dioleinheit (B); 1,4:3,6-Dianhydrohexitol-Einheiten (A) und mindestens eine aromatische Carbonsäure-Disäure-Einheit (C), wobei der Polyester frei von Ethylenglykol-Einheiten ist.

### Aufgabe der Erfindung

Aus den Nachteilen des beschriebenen Stands der Technik resultiert die Aufgabe, welche die vorliegende Erfindung initiierte, die Neigung der Rissbildung in Behältern hergestellt aus Polyestern zu reduzieren.

### Beschreibung

Zur Herstellung eines Kunststoffbehälters in einem Blasformverfahren werden Preforms aus Polyester eingesetzt. Der Preform, welcher auch als Vorformling bezeichnet wird, wird zumeist im Spritzgussprozess zu einem rohrförmigen Preformkörper ausgeformt, welcher an seinem einen Längsende geschlossen ausgebildet ist und an seinem anderen Längsende einen mit einer Ausgiessöffnung versehenen Halsabschnitt aufweist.

Die Lösung der gestellten Aufgabe gelingt bei einem Preform nach Anspruch 1 aus Polyester zur Herstellung eines Kunststoffbehälters dadurch, dass der Polyester im Wesentlichen auf einer Furandicarbonsäure und Diolen basiert, wobei die Diole zu einem ersten Teil aus der Gruppe der Spiroverbindungen und zu einem zweiten Teil aus der Gruppe herkömmlicher Diole entstammen. Der Polyester des Preforms besteht daher im Wesentlichen aus einer Furandicarbonsäure und einer Komponente gewählt aus der Gruppe von Spiroverbindungen und herkömmlichen Diolen und einer Kombination daraus.

Diese Zusammensetzung des Polyesters ermöglicht es in überraschender Weise, dass der Polyester zum Teil biobasiert sein kann und gleichzeitig die Neigung des aus dem Preform hergestellten Kunststoffbehälters zur Rissbildung stark reduziert ist. Die Reduzierung der Rissbildung lässt sich durch die Zugabe der Spiroverbindung erzielen. Im Rahmen dieser Anmeldung ist unter einer Spiroverbindung eine polycyclische organische Verbindung zu verstehen, deren Ringe an nur einem Atom verbunden sind. Das Atom an dem die benachbarten Ringe verbunden sind, wird als Spiroatom bezeichnet. Das Spiroatom wirkt als eine Art Gelenk zwischen den benachbarten Ringen, wodurch die Ringe zueinander flexibel und bewegbar bleiben. Durch die Verbindung der Polyestermoleküle mit den Spiroverbindungen besitzen die Polyestermoleküle eine erhöhte Beweglichkeit bzw. Flexibilität. Dadurch können Spannungen in der Molekülstruktur abgebaut bzw. gedämpft werden.

Durch das Einfügen einer Spiroverbindung kann die Esterbindung zusätzlich zur Steigerung der Beweglichkeit der Molekülketten vor nukleophilen Angriffen geschützt werden, da die Spiroverbindung die Esterbindung sterisch schützt. Der Angriff von Laugen, insbesondere deren Hydroxid-Ionen, welche beim Waschen von Mehrwegbehältern zum Einsatz kommen, kann daher durch das Hinzufügen von Spiroverbindungen zu dem Polyester verhindert werden.

Die Gruppe herkömmlicher Diole umfasst Monoethylengycol, Diethylenglycol, Propylenglycol oder Butylenglycol. Der Preform kann daher aus den unterschiedlichsten Polyestern oder Copolymeren hergestellt sein, da eine grosse Bandbreite an Diolen geeignet ist, mit Furandicarbonsäure zum Polyester umgesetzt zu werden und der Polyester dazu geeignet ist, dass Spiroverbindungen in die Polymerstruktur eingebunden werden können. Erfindungsgemäß beträgt der Anteil der Spiroverbindung wenigstens 1, bevorzugt mindestens 2 Gewichtsprozente, wobei die Gewichtsprozente auf das Gesamtgewicht des Preforms bezogen sind. Bereits die Zugabe einer geringen Menge an Spiroverbindungen bzw. eines spirobasierten Monomers zu dem Polyester haben eine signifikante Verbesserung der ESCR zur Folge. Die folgende Testmethode (Standard ISBT Stress Cracking Test) kann beispielsweise angewendet werden, um die ESCR eines Polyesterbehälters zu bestimmen: Der Behälter wird mit Wasser gefüllt, sodass er sein Nennvolumen an Wasser beinhaltet. Der Behälter ist sodann mit einem Druck von 77 +/- 0,5 psi (entspricht 531 ± 4 kPa) zu beaufschlagen und zu verschliessen. Der Wasserfüllstand ist an dem Behälter zu markieren. Anschliessend ist der Behälter in ein Bad aus 0,2 Gew%er Natronlauge zu stellen. Die Natronlauge hat den gesamten Behälterboden zu bedecken. Die Zeit bis zum Versagen des Behälters ist ein Maß für die Stress Cracking beständigkeit. Das Versagen kann durch eine Explosion des Behälters oder ein Leck erfolgen. Das Leck ist daran zu erkennen, dass der Füllstand des Wassers in dem Behälter abnimmt bzw. der Innendruck abfällt. Der Standard ISBT Stress Cracking Test ist besonders zur Bestimmung der ESCR von Kunststoffflaschen aus Polyester geeignet.

Ein Versuch nach dem Standard ISBT Stress Cracking Test hat ergeben, dass es fast doppelt so lange dauert bis eine Polyesterflasche, welche aus mit 4 Gew% Spiroverbindungen versetztem Polyester hergestellt wurde, versagt im Vergleich zu einer Polyesterflasche, welche keine Spiroverbindungen enthält. Die Polyesterflasche, welche 4 Gew% Spiroverbindungen enthält versagt nach 70 Minuten. Eine Vergleichs-Polyesterflasche, welche mit Ausnahme der Spiroverbindungen in Material und Form identisch ist, versagt bereits nach 40 Minuten. Dieser Versuch belegt, dass die Polyesterflasche durch die Hinzugabe der Spiroverbindungen beständiger wird, bzw. einer grösseren Belastung hinsichtlich Chemikalienkontakt, Umwelteinflüssen und/oder Innendruck standhalten kann.

In einer weiteren bevorzugten Ausführungsform der Erfindung beträgt der Anteil der Spiroverbindung zwischen 1 und 35 Gewichtsprozent, bevorzugt zwischen 2 und 10 Gewichtsprozent und besonders bevorzugt zwischen 3 und 5 Gewichtsprozent, wobei die Gewichtsprozente auf das Gesamtgewicht des Preforms bezogen sind. Je nach der zu erwartenden Belastung des aus dem Preform hergestellten Polyester-Behälters kann der Anteil an Spiroverbindungen erhöht werden, um eine Rissbildung und ein damit einhergehendes Versagen des Behälters zu verhindern. Die Spannungsrissbildung, welche wie weiter oben beschrieben bei der Umformung von dem Preform zu dem Polyester-Behälter zwangsläufig auftritt, kann durch das Vorsehen der Spiroverbindungen signifikant reduziert werden.

In einer besonders bevorzugten Ausführungsform ist die Spiroverbindung 3,9-Bis(1,1-Dimethyl-2-Hydroxyethyl)-2,4,8,10-Tetraoxaspiro[5.5]Undecan (Spiroglycol). Auch andere Spiroverbindungen eignen sich hervorragend durch ihre Methyl- und Ethylgruppen sterisch die Esterbindung zu schützen.

Zweckmässigerweise ist der spezielle Spiro basierende Polyester ein Copolyester basierend auf PEF, PPF oder PBF. Der Preform bzw. der Behälter kann daher auch biobasiert sein und weist gleichzeitig die sich durch das Hinzufügen der Spiroverbindungen ergebenden Vorteile auf. Dabei ist es unerheblich, ob der Polyester bzw. der Behälter eingefärbt beschichtet oder texturiert ist. PPF ist die Abkürzung für Polypropylenfuranoat und PBF ist die Abkürzung für Polybuthylenfuranoat. Der Polyester ist bevorzugt ein Copolymer mit Polyethylenfuranoat, Polypropylenfuranoat oder Polybuthylenfuranoat als erste Monomereinheiten und Spirodiol als zweite Monomereinheit.

Als vorteilhaft erweist es sich, wenn der Preformkörper eine Wanddicke aufweist, die zwischen 1 mm und 16 mm ist. Das Vorsehen der Spiroverbindung in dem Polyester ermöglicht es auch sehr dicke Preforms herzustellen, die trotz der Dicke beim langsamen Abkühlen kaum Kristallisationserscheinungen aufzeigen und nicht eintrüben. Diese Preforms sind für Polyester-Behälter vorgesehen, welche Glasbehälter ersetzen können. Dadurch sind Polyester-Behälter herstellbar, deren Eigenschaften den positiven Eigenschaften beispielsweise Stabilität und Wiederverwendbarkeit von Glasbehältern entsprechen.

In einer weiteren Ausführungsform der Erfindung ist der Preform zur Ausbildung eines Mehrweg-Behälters ausgebildet. Der Mehrweg-Behälter ist resistent gegen aggressive Chemikalien, welche üblicherweise vor dem erneuten Inverkehrbringen des Mehrweg-Behälters zu dessen Reinigung aus hygienischen Gründen angewendet werden müssen. Die Spiroverbindungen schützen die Esterbindungen und verhindern, dass diese durch Verseifungsreaktionen geschwächt werden. Solche Verseifungsreaktionen finden beispielweise zwischen Polyestern und Laugen statt, welche bei der Reinigung von Mehrweg-Behältern verwendet werden.

Ein weiterer Aspekt der Erfindung betrifft einen Polyester-Behälter aus einem Preform gemäss der obigen Beschreibung, wobei der Behälter eine Spiroverbindung aufweist und mehr als 30 min im Standard ISBT Stress Cracking Test mit einer 0,2% Lauge aushält. Diese Widerstandswerte zeigen, dass ein Polyester-Behälter, welcher Spiroverbindungen enthält, hohe Belastungen hinsichtlich Chemikalienangriff und/oder Innendruck ertragen kann. So kann der erfindungsgemässe Polyesterbehälter nicht nur der Reinigung mit Chemikalien ohne auftretende Rissbildung widerstehen - er ist auch dazu geeignet, dass er zur Abfüllung von waschaktiven Substanzen, duftaktiven Substanzen und Lösungsmitteln geeignet ist, welche herkömmliche Polyester-Behälter angreifen und zerstören.

In einer weiteren bevorzugten Ausführungsform der Erfindung ist der Behälter derartig ausgebildet, dass er zur Wiederbefüllung bzw. als Mehrwegflasche geeignet ist. Die zur Reinigung notwendigen Chemikalien, insbesondere Laugen, um den Behälter wieder befüllen zu können, greifen den Polyester nicht oder nur in reduziertem Ausmass an, da die Esterbindungen des Polyesters durch die Spiroverbindungen vor dem Chemikalienangriff geschützt sind.

In einer weiteren besonders bevorzugten Ausführungsform der Erfindung ist der Behälter derartig ausgebildet, dass er einen Innendruck nach Befüllung von bis zu 3 bar, bevorzugt bis zu 5 bar und besonders bevorzugt bis zu 12 bar standhält und dadurch für die Abfüllung von kohlesäurehältigen Getränken oder Aerosolen geeignet ist. Die Spiroverbindungen reduzieren die Rissbildung, wodurch der Polyesterbehälter derartig stabil ist, dass er Innendrücke bis zu 12 bar ertragen kann. Er kann daher nicht nur druckbildende Flüssigkeiten aufnehmen, sondern kann auch als Aerosoldose ausgebildet sein. Ferner ist er dazu geeignet ein Füllvolumen von mehr als 1,5 Liter zu besitzen und eine kohlenäurehaltige Flüssigkeit von mehr als 1,5 Liter aufzunehmen.

Die Erfindung zeichnet sich bevorzugt dadurch aus, dass der Behälter derartig ausgebildet ist, dass er Temperaturen zwischen -19°C und 96°C standhält und dadurch für einen Abfüllprozess von Behälterinhalten mit einer Temperatur zwischen -19°C und 96°C geeignet ist. Das Vorsehen der Spiroverbindung in dem Polyester führt auch dazu, dass die Glasübergangstemperatur des Polyesters gesteigert wird. Dadurch ist der Behälter für die Heissabfüllung von Produkten und die Pasteurisierung des Behälterinhaltes direkt im Behälter geeignet.

Bei einem Verfahren zur Herstellung eines Preforms wird eine Mischung von Polyester-Kunststoffgranulaten bereitet, wobei der Polyester im Wesentlichen aus einer Furandicarbonsäure und Diolen hergestellt ist und ein Preform durch Spritzgiessen aus der Mischung hergestellt wird. Nach einem weiteren Aspekt der Erfindung wird während der Polymerisierung des Polyesters diesem eine Spiroverbindung zugegeben oder die Spiroverbindung wird den Polyester-Kunststoffgranulaten während dem Aufschmelzen vor dem Spritzgiessen zugegeben und die Mischung enthält nach der Zugabe der Spiroverbindung einen Anteil der Spiroverbindung von mindestens 1, bevorzugt mindestens 2 Gewichtsprozent enthält, wobei die Gewichtsprozente auf das Gesamtgewicht der Mischung bezogen sind.

Die Copolymerisierung der Spiroverbindungen in der benötigten Menge kann einfach und rasch durch eine Umesterung erfolgen, da kein zusätzlicher Verfahrensschritt notwendig ist. Vielmehr kann die Spiroverbindung in einem Polyester ohne Spirodiolen, mit einem zweiten Polyester mit hoher Konzentration an Spirodiolen durch Umesterung eingebracht werden, und während bereits vorhandenen Verfahrensschritten, nämlich der Polymerisierung des Polyesters oder dem Aufschmelzen des Kunststoffgranulats, zugegeben werden. Es hat sich gezeigt, dass sich die Spiroverbindung während der Polymerisierung oder dem Aufschmelzen des Polyesters eine homogene Verbindung mit dem Polyester eingeht und der modifizierte Polyester die weiter oben beschriebenen funktionellen Anforderungen sehr gut erfüllen kann.

Als vorteilhaft erweist es sich, wenn der Anteil der Spiroverbindung zwischen 1 und 35 Gewichtsprozent, bevorzugt zwischen 2 und 10 Gewichtsprozent und besonders bevorzugt zwischen 3 und 5 Gewichtsprozent enthält, wobei die Gewichtsprozente auf das Gesamtgewicht der Mischung bezogen sind. Durch die Wahl der Menge der Spiroverbindungen lassen sich die benötigten funktionalen Eigenschaften des Polyester-Behälters derart einstellen, dass das Anforderungsprofil hinsichtlich Chemikalienresistenz, Temperaturbeständigkeit und Druckbeständigkeit erfüllt werden kann.

Die Veröffentlichung betrifft auch ein Copolymer zur Herstellung eines Preforms aus einem Polyester, wobei der Polyester im Wesentlichen aus einer Furandicarbonsäure und Diolen, und einer Spiroverbindung hergestellt ist, wobei der Anteil der Spiroverbindung wenigstens 1, bevorzugt 2 Gewichtsprozent beträgt und die Gewichtsprozente auf das Gesamtgewicht des Coploymers bezogen sind. Das Copolymer umfasst daher bevorzugt Polyethylenfuranoat, Polypropylenfuranoat oder Polybuthylenfuranoat als erste Monomereinheiten und eine Spiroverbindung als eine zweite Monomereinheit. Die funktionellen Eigenschaften des aus dem Copolymer hergestellten Preforms bzw. Polyester-Behälters lassen sich daher bereits mit einer relativ geringen Menge an Spiroverbindungen erreichen. Die Spiroverbindung kann zur Herstellung der Preform-Mischung dem Polyester während dessen Polymerisierung oder dem Aufschmelzen zum Spritzgiessen des Preforms beigefügt werden.

Ein letzter Aspekt der Veröffentlichung betrifft ein Kunststoffgranulat zur Herstellung eines Preforms aus Polyester wobei der Polyester im Wesentlichen aus einer Furandicarbonsäure und Diolen und einer Spiroverbindung hergestellt ist, wobei der Anteil der Spiroverbindung wenigstens 1, bevorzugt 2 Gewichtsprozent beträgt und die Gewichtsprozente auf das Gesamtgewicht des Kunststoffgranulats bezogen sind. Enthält das Kunststoffgranulat die Spiroverbindungen, so werden diese bereits während der Polymerisierung des Polyesters in dessen Struktur eingebaut. Die Intrinsische Viskosität (IV) des Kunststoffgranulats ist größer gleich 0,5 und kleiner gleich 1,5 dl/g, gemessen in Analogie zu der Prüfnorm ASTM D4603. Gemessen in Analogie zu der Prüfnorm ASTM D4603 bedeutet, dass die Prüfnorm ASTM D4603, die nur für PET gilt, auf einen Prüfling, der im Wesentlichen aus einer Furandicarbonsäure und Diolen und einer Spiroverbindung hergestellt ist, anzuwenden ist. Ferner ist das Kunststoffgranulat kristallin. Hierbei ist die Kristallinität des Kunststoffgranulats größer als 20%. Weiterhin klebt das Kunststoffgranulat bei einer Trocknungstemperatur von größer gleich 130°C nicht aneinander.

## Patentansprüche

1. Preform aus einem Polyester zur Herstellung eines Kunststoffbehälters in einem Blasformverfahren mit einem rohrförmigen Preformkörper, der an seinem einen Längsende geschlossen ausgebildet ist und an seinem anderen Längsende einen mit einer Ausgiessöffnung versehenen Halsabschnitt aufweist, wobei der Preform im Spritzgussprozess hergestellt ist,
wobei der Polyester im Wesentlichen auf einer Furandicarbonsäure und Diolen basiert, wobei die Diole zu einem ersten Teil aus der Gruppe der Spiroverbindungen und zu einem zweiten Teil aus der Gruppe herkömmlicher Diole entstammen, wobei die Gruppe herkömmlicher Diole Monoethylenglycol, Diethylenglycol, Propylenglycol oder Butylenglycol umfasst,
wobei der Anteil der Spiroverbindung wenigstens 1, bevorzugt mindestens 2 Gewichtsprozente beträgt, wobei die Gewichtsprozente auf das Gesamtgewicht des Preforms bezogen sind.

2. Preform nach Anspruch 1, **dadurch gekennzeichnet, dass** der Anteil der Spiroverbindung zwischen 1 und 35 Gewichtsprozent, bevorzugt zwischen 2 und 10 Gewichtsprozent und besonders bevorzugt zwischen 3 und 5 Gewichtsprozent beträgt, wobei die Gewichtsprozente auf das Gesamtgewicht des Preforms bezogen sind.

3. Preform nach einem der vorangehenden Ansprüche, **dadurch gekennzeichnet, dass** die Spiroverbindung 3,9-Bis(1,1-Dimethyl-2-Hydroxyethyl)-2,4,8,10-Tetrao-xaspiro[5.5]Undecan (Spiroglycol) ist.

4. Preform nach einem der vorangehenden Ansprüche, **dadurch gekennzeichnet, dass** der Polyester ein Copolyester basierend auf PEF, PPF oder PBF ist.

5. Preform nach einem der vorangehenden Ansprüche, **dadurch gekennzeichnet, dass** der Preformkörper eine Wanddicke aufweist, die zwischen 1 mm und 16 mm ist.

6. Preform nach einem der vorangehenden Ansprüche, **dadurch gekennzeichnet, dass** der Preform zur Ausbildung eines Mehrweg-Behälters ausgebildet ist.

7. Polyester-Behälter aus einem Preform nach einem der vorangehenden Ansprüche, wobei der Behälter eine Spiroverbindung aufweist und mehr als 30 min im Standard ISBT Stress Cracking Test mit einer 0,2% Lauge aushält.

8. Behälter nach Anspruch 7, **dadurch gekennzeichnet, dass** der Behälter derartig ausgebildet ist, dass er zur Wiederbefüllung bzw. als Mehrwegflasche geeignet ist.

9. Behälter nach einem der Ansprüche 7 oder 8, **dadurch gekennzeichnet, dass** der Behälter derartig ausgebildet ist, dass er einen Innendruck nach Befüllung von bis zu 3 bar, bevorzugt bis zu 5 bar und besonders bevorzugt bis zu 12 bar standhält und dadurch für die Abfüllung von kohlesäurehältigen Getränken oder Aerosolen geeignet ist.

10. Behälter nach einem der Ansprüche 7 bis 9, **dadurch gekennzeichnet, dass** der Behälter derartig ausgebildet ist, dass er Temperaturen zwischen -19°C und 96°C standhält und dadurch für einen Abfüllprozess von Behälterinhalten mit einer Temperatur zwischen -19°C und 96°C geeignet ist.

11. Verfahren zur Herstellung eines Preforms, bei welchem
- eine Mischung von Polyester-Kunststoffgranulaten bereitet wird, wobei der Polyester im Wesentlichen aus einer Furandicarbonsäure und Diolen hergestellt ist, wobei die Diole zu einem Teil aus der Gruppe der Spiroverbindungen und zu einem zweiten Teil aus der Gruppe herkömmlicher Diole entstammen, wobei die Gruppe herkömmlicher Diole Monoethylenglycol, Diethylenglycol, Propylenglycol oder Butylenglycol umfasst, und
- ein Preform durch Spritzgiessen aus der Mischung hergestellt wird, wobei während der Polymerisierung des Polyesters diesem eine Spiroverbindung zugegeben wird oder die Spiroverbindung den Polyester-Kunststoffgranulaten während dem Aufschmelzen vor dem Spritzgiessen zugegeben wird und die Mischung nach der Zugabe der Spiroverbindung einen Anteil der Spiroverbindung von mindestens 1, bevorzugt mindestens 2 Gewichtsprozent enthält, wobei die Gewichtsprozente auf das Gesamtgewicht der Mischung bezogen sind.

12. Verfahren nach Anspruch 11, **dadurch gekennzeichnet, dass** der Anteil der Spiroverbindung zwischen 1 und 35 Gewichtsprozent, bevorzugt zwischen 2 und 10 Gewichtsprozent und besonders bevorzugt zwischen 3 und 5 Gewichtsprozent enthält, wobei die Gewichtsprozente auf das Gesamtgewicht der Mischung bezogen sind.

## Claims

1. A preform made of a polyester for producing a plastic container in a blow molding process which comprises a tube-like preform body which is closed at its one longitudinal end and at its other longitudinal end has a neck section provided with an opening for pouring, wherein the preform is produced by injection molding, wherein the polyester is based on furandicarboxylic acid and diols, wherein the diols are derived partly from the group of spiro compounds and partly from the group of conventional diols, wherein the group of conventional diols comprises monoethylene glycol, diethylene glycol, propylene glycol or butylene glycol, wherein the proportion of said spiro compound is at least 1, preferably at least 2 percent by weight, the percentages by weight being based on the total weight of the preform.

2. The preform according to claim 1, **characterized in that** the proportion of said spiro compound is between 1 and 35 percent by weight, preferably between 2 and 10 percent by weight and particularly preferably between 3 and 5 percent by weight, the percentages by weight being based on the total weight of the preform.

3. The preform according to any one of the preceding claims, **characterized in that** said spiro compound is 3,9-bis(1,1-dimethyl-2-hydroxyethyl)-2,4,8,10-tetraoxaspiro[5.5]undecane (spiroglycol).

4. The preform according to any one of the preceding claims, **characterized in that** said polyester is a copolyester based on PEF, PPF or PBF.

5. The preform according to any one of the preceding claims, **characterized in that** the preform body has a wall thickness which is between 1 mm and 16 mm.

6. The preform according to any one of the preceding claims, **characterized in that** said preform is formed to form a reusable container.

7. The polyester container made of a preform according to any one of the preceding claims, wherein said container has a spiro compound and withstands more than 30 min in the standard ISBT stress cracking test with a 0.2% alkali.

8. The container according to claim 7, **characterized in that** said container is formed in such a way that it is suitable for refilling or as a reusable bottle.

9. The container according to any one of claims 7 or 8, **characterized in that** the container is formed in such a way that it withstands an internal pressure after filling of up to 3 bar, preferably up to 5 bar and particularly preferably up to 12 bar and thereby is suitable for the filling of carbonated beverages or aerosols.

10. The container according to any one of claims 7 to 9, **characterized in that** the container is formed in such a way that it withstands temperatures between -19 °C and 96 °C and thereby is suitable for a filling process of container contents with a temperature between -19 °C and 96 °C.

11. A process for producing a preform, wherein
- a mixture of polyester plastic granules is prepared, wherein said polyester is made of a furandicarboxylic acid and diols, wherein the diols are derived partly from the group of spiro compounds and partly from the group of conventional diols, wherein the group of conventional diols comprises monoethylene glycol, diethylene glycol, propylene glycol or butylene glycol, and
- a preform is produced by injection molding from said mixture,
wherein
during the polymerization of the polyester a spiro compound is added to it, or the spiro compound is added to the polyester plastic granules during melting prior to injection molding and the mixture, after the addition of said spiro compound, contains a proportion of the spiro compound of at least 1, preferably at least 2 percent by weight, the percentages by weight being based on the total weight the mixture.

12. The process according to claim 11, **characterized in that** the proportion of said spiro compound contains between 1 and 35 percent by weight, preferably between 2 and 10 percent by weight and particularly preferably between 3 and 5 percent by weight, the percentages by weight being based on the total weight of the mixture.

## Revendications

1. Préforme faite en un polyester pour la fabrication d'un conteneur en matière plastique par moulage par soufflage avec un corps de préforme en forme de tube qui est configuré fermé à l'une de ses extrémités et qui présente une portion de col pourvue d'une ouverture verseuse à son autre extrémité, la préforme étant fabriquée par moulage par injection, le polyester étant basé substantiellement sur un acide furanedicarboxylique et de diols, les diols provenant pour une première partie du groupe des composés spiro et pour une seconde partie du groupe des diols classiques, le groupe des diols classiques comprenant le monoéthylène glycol, le diéthylène glycol, le propylène glycol ou le butylène glycol, la proportion du composé spiro étant d'au moins 1, de préférence d'au moins 2 pour-cents en poids, les pour-cents en poids se rapportant au poids total de la préforme.

2. Préforme selon la revendication 1,
**caractérisée en ce que** la proportion du composé spiro étant entre 1 et 35 pour-cents en poids, de préférence entre 2 et 10 pour-cents en poids et de manière particulièrement préférée entre 3 et 5 pour-cents en poids, les pour-cents en poids se rapportant au poids total de la préforme.

3. Préforme selon l'une des revendications précédentes, **caractérisée en ce que** le composé spiro est 3,9-bis(1,1-diméthyl-2-hydroxyéthyl)-2,4,8,10-tétraoxaspiro[5,5]undécane (spiroglycol).

4. Préforme selon l'une des revendications précédentes, **caractérisée en ce que** le polyester est un copolyester basé sur du PEF, du PPF ou du PBF.

5. Préforme selon l'une des revendications précédentes, **caractérisée en ce que** le corps de préforme présente une épaisseur de paroi qui est entre 1 mm et 16 mm.

6. Préforme selon l'une des revendications précédentes, **caractérisée en ce que** la préforme est configurée pour former un conteneur réutilisable.

7. Conteneur en polyester fait en une préforme selon l'une des revendications précédentes, le conteneur présentant un composé spiro et résistant plus de 30 minutes à un essai de fissuration sous contrainte standard ISBT avec de la soude caustique à 0,2%.

8. Conteneur selon la revendication 7, **caractérisé en ce que** le conteneur est configuré pour être approprié pour le remplissage ou encore comme bouteille réutilisable.

9. Conteneur selon l'une des revendications 7 ou 8, **caractérisé en ce que** le conteneur est configuré de manière à résister à une pression intérieure après remplissage allant jusqu'à 3 bar, de préférence jusqu'à 5 bar et de manière particulièrement préférée jusqu'à 12 bar et qu'il est donc approprié pour le remplissage de boissons carbonatées ou d'aérosols.

10. Conteneur selon l'une des revendications 7 à 9, **caractérisé en ce que** le conteneur est configuré de manière à résister à des températures entre -19°C et 96°C et qu'il est donc approprié pour un processus de remplissage de contenus de conteneurs avec une température entre -19°C et 96°C.

11. Procédé de fabrication d'une préforme pour lequel
- un mélange de granulés de plastique en polyester est préparé, le polyester étant fabriqué essentiellement à partir de un acide furanedicarboxylique et de diols, les diols provenant pour une première partie du groupe des composés spiro et pour une seconde partie du groupe des diols classiques, le groupe des diols classiques comprenant le monoéthylène glycol, le diéthylène glycol, le propylène glycol ou le butylène glycol
Et
- une préforme est fabriquée par moulage par injection à partir d'un mélange, cependant qu'un composé spiro est ajouté au polyesterpendant la polymérisation de celui-ci ou le composé spiro est ajouté aux granulés de plastique en polyester pendant la fusion avant le moulage par injection et le mélange contient, après l'ajout du composé spiro, une proportion de composé spiro d'au moins 1 pour-cent en poids, de préférence d'au moins 2 pour-cents en poids, les pour-cents en poids se rapportant au poids total du mélange.

12. Procédé selon la revendication 11, **caractérisé en ce que** la proportion du composé spiro est entre 1 et 35 pour-cents en poids, de préférence entre 2 et 10 pour-cents en poids et de manière particulièrement préférée entre 3 et 5 pour-cents en poids, les pour-cents en poids se rapportant au poids total du mélange.
